(19) Europäisches Patentamt / European Patent Office / Office européen des brevets

(11) **EP 3 391 603 B1**

(12) **EUROPEAN PATENT SPECIFICATION**

(45) Date of publication and mention of the grant of the patent:
**02.10.2019 Bulletin 2019/40**

(21) Application number: **16700117.1**

(22) Date of filing: **07.01.2016**

(51) Int Cl.:
*H04L 27/20* (2006.01)  *H04L 27/26* (2006.01)
*H04L 27/00* (2006.01)

(86) International application number:
**PCT/EP2016/050226**

(87) International publication number:
**WO 2017/118485 (13.07.2017 Gazette 2017/28)**

(54) **ASYMMETRIC CONSTANT AMPLITUDE MODULATION**

ASYMMETRISCHE KONSTANTE AMPLITUDENMODULATION

MODULATION D'AMPLITUDE CONSTANTE ASYMÉTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**24.10.2018 Bulletin 2018/43**

(73) Proprietor: Huawei Technologies Co., Ltd.
**Longgang District**
**Shenzhen, Guangdong 518129 (CN)**

(72) Inventor: **GAFFNEY, Brian**
**80992 Munich (DE)**

(74) Representative: **Kreuz, Georg Maria**
**Huawei Technologies Duesseldorf GmbH**
**Riesstraße 25**
**80992 München (DE)**

(56) References cited:
**US-A1- 2011 194 510**

- **QUALCOMM INCORPORATED: "Narrow band OFDMA- Tone-Phase-Shift Keying Modulation", 3GPP DRAFT; GP-140842- TONE PHASE SHIFT KEYING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. TSG GERAN, no. San Francisco, USA; 20141117 - 20141121 17 November 2014 (2014-11-17), XP050894994, Retrieved from the Internet: URL:http://www.3gpp.org/ftp/Meetings_3GPP_SYNC/GERAN/Docs/ [retrieved on 2014-11-17]**
- **QUALCOMM INCORPORATED: "Peak-to-Average Power Ratio and Power Spectral Density of Tone-Phase-Shift Keying", 3GPP DRAFT; GP-150116- NB-OFDMA PAPR AND PSD OF TPSK, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. TSG GERAN, no. Shanghai, China; 20150309 - 20150313 8 March 2015 (2015-03-08), XP050931566, Retrieved from the Internet: URL:http://www.3gpp.org/ftp/Meetings_3GPP_SYNC/GERAN/Docs/ [retrieved on 2015-03-08]**

**Description**

BACKGROUND

The present invention, in some embodiments thereof, relates to reducing out-of-band emissions for a carrier signal and, more specifically, but not exclusively, to reducing out-of-band emissions for the carrier signal, in particular a single carrier (SC) signal by applying a phase shift to data modulated over the carrier signal in order to asymmetrically warp a frequency spectrum of the carrier signal.

The evolution of internet of things (IoT) has introduced the need for connectivity for a plurality of user equipment (UE) units such as, for example, products, devices, platforms and/or systems. Communication and specifically cellular communication was traditionally employed by relatively high-end UEs, for example, telephones, tablets, personal devices and/or control and/or communication systems. However, with evolution and wide spread of the IoT, the number of communicating UEs may increase by many folds. While the IoT UEs may be abundant in number they may be low-end devices, units and/or systems in one or more aspects, for example, low power, low cost, and/or low throughput. Cellular UEs are typically identified with one or more carrier signals, in particular SC signals for communicating with one or more base stations and/or infrastructure equipment. The increase in IoT UEs and specifically cellular IoT UEs may require adapting new methods and/or innovations to deal with the challenges presented by the IoT UEs, and specifically the IoT UEs low-end characteristics.

US 2011/194510 A1 describes a method and an apparatus for sending and receiving a low-complexity transmission in a wireless communication system.

QUALCOMM INCORPORATED: "Narrow band OFDMA- Tone-Phase- Shift Keying Modulation", 33GPP DRAFT; GP-140842- TONE PHASE SHIFT KEYING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. San Francisco, USA; 20141117 - 20141121 17 November 2014 (2014-11-17), describes an access stratum solutions, named Tone-Phase-Shift Keying (TPSK), to meet the needs for Internet of Things (IoT).

QUALCOMM INCORPORATED: "Peak-to-Average Power Ratio and Power Spectral Density of Tone-Phase-Shift Keying", 3GPP DRAFT; GP-150116- NB-OFDMA PAPR AND PSD OF TPSK, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. Shanghai, China; 20150309 - 20150313 8 March 2015 (2015-03-08), describes Tone-Phase-Shift Keying (TPSK) as a modulation scheme for the uplink transmission of narrow band OFDMA (NB-OFDMA).

SUMMARY

It is an object of the invention to decrease emissions in mobile communication, in particular for a single carrier signal.

This object is achieved by the subject matter protected by the independent claims. The dependent claims provide further embodiments thereof.

According to an aspect of some embodiments of the present invention there is provided an apparatus for reducing out-of-band emissions of a carrier signal, in particular of a single carrier (SC) signal, adapted to determine a phase shift between consecutive modulation symbols of a carrier signal according to a frequency spectral location of a subcarrier mapping the modulation symbol within a frequency spectrum of the band of the carrier signal, apply the phase shift to the carrier signal and submit the carrier signal through a phase domain low pass filter (LPF) in order to asymmetrically warp the frequency spectrum of the carrier signal, and wherein the phase shift is determined dynamically for at least one of the modulation symbols, so that a phase of each modulation symbol is shifted towards a center frequency of the frequency spectrum and away from at least one edge frequency of the frequency spectrum. This has the effect of reducing out-of-band emissions, in particular of emissions induced by phase discontinuities between the consecutive modulation symbols. Wherein determining the phase shift is based on a modulation type of the modulation symbols and/or a subcarrier frequency spectral location of the carrier signal to which the modulation symbols are mapped.

Optionally, the carrier signal is a member selected from a group consisting of: a single carrier frequency division multiple access (SC-FDMA), a single carrier time division multiple access (SC-TDMA), a single channel code division multiple access (SC-CDMA) and a single channel space division multiple access (SC-SDMA).

The phase domain LPF is applied to the carrier signal in order to reduce a phase discontinuity between the consecutive modulation symbols, in particular after insertion of a cyclic prefix to the carrier signal.

The modulation symbols map a plurality of data bits which are phase modulated.

Optionally, the phase shift is applied according to an incremental index of a plurality, in particular each, of the subcarriers of the carrier signal. Wherein the phase is shifted right for modulation symbols which are mapped to left subcarriers which are spectrally located left of the center and/or the phase is shifted left for modulation symbols which are mapped to right subcarriers which are spectrally located right of the center.

Optionally, the phase shift is applied according to a formula:

$$
\Delta\varphi = \begin{cases} -\dfrac{\pi}{2}\left(1 + K\dfrac{n + {}^{1}/_{2} - {}^{N_{SC}}/_{2}}{{}^{N_{SC}}/_{2}}\right), for\ n < {}^{N_{SC}}/_{2} \\[3mm] \dfrac{\pi}{2}\left(1 - K\dfrac{n + {}^{1}/_{2} - {}^{N_{SC}}/_{2}}{{}^{N_{SC}}/_{2}}\right), for\ n \geq {}^{N_{SC}}/_{2} \end{cases}
$$

wherein $\Delta\varphi$ is the phase shift, **n** is an incremental index number of each of the subcarriers of the carrier signal, the incremental index number is assigned according to the spectral location of each subcarrier, $N_{sc}$ is a total number of the subcarriers within the carrier signal and **K** is a coefficient for applying a weight to the phase shift.

Optionally, a key of the phase shift is encoded in at least one pilot signal of the carrier signal.

Applying the phase shift does not impact an amplitude level of the carrier signal and maintains a constant level of the amplitude.

Applying the phase shift does not impact an orthogonality of the subcarriers within the carrier signal and maintains the orthogonality.

Applying the phase shift limits the frequency spectrum of the carrier signal to allow a transmitter to be utilized using a standard industry transmitter for transmitting the carrier signal.

According to an aspect of some embodiments of the present invention there is provided a method for reducing out-of-band emissions of a carrier signal, in particular of a single carrier (SC) signal, comprising determining a phase shift between consecutive modulation symbols of a carrier signal according to a frequency spectral location of a subcarrier mapping the modulation symbol within a frequency spectrum of the band of the carrier signal, applying the phase shift to the carrier signal and submit the carrier signal through a phase domain LPF in order to asymmetrically warp the frequency spectrum of the carrier signal for reducing out-of-band emissions induced by phase discontinuities between the consecutive modulation symbols, and wherein the phase shift is determined dynamically for at least one of the modulation symbols, so that a phase of each modulation symbol is shifted towards a center frequency of the frequency spectrum and away from at least one edge frequency of the frequency spectrum. Wherein determining the phase shift is based on a modulation type of the modulation symbols and/or a subcarrier frequency spectral location of the carrier signal to which the modulation symbols are mapped.

Unless otherwise defined, all technical and/or scientific terms used herein have the same meaning as commonly understood by one of ordinary skill in the art to which the invention pertains. Although methods and materials similar or equivalent to those described herein can be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

## BRIEF DESCRIPTION OF THE SEVERAL VIEWS OF THE DRAWINGS

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:

FIG. 1 is a schematic illustration of an exemplary apparatus for reducing out-of-band emissions for a carrier signal, in particular an SC signal, according to some embodiments of the present invention;

FIG. 2 is a flowchart of an exemplary process of reducing out-of-band emissions for a carrier signal, in particular an SC signal, according to some embodiments of the present invention;

FIG. 3 is a schematic illustration of an exemplary apparatus implementation for reducing out-of-band emissions for an SC-FDMA signal, according to some embodiments of the present invention;

FIG. 4 is a schematic illustration of a spectral view presenting exemplary warpage of a spectrum of subcarriers of an SC-FDMA signal with respect to a spectral mask of an SC-FDMA, according to some embodiment of the present invention;

FIG. 5 is a schematic illustration of an exemplary phase low pass filter (LPF), according to some embodiment of the present invention; and

FIG. 6 is a schematic illustration of a time domain warped SC-FDMA signal maintaining a constant amplitude, according to some embodiment of the present invention.

## DETAILED DESCRIPTION

The present invention, in some embodiments thereof, relates to reducing out-of-band emissions for a carrier signal and, more specifically, but not exclusively, to reducing out-of-band emissions for the carrier signal, in particular a single carrier (SC) signal by applying a phase shift to data modulated over the carrier signal in order to asymmetrically warp a frequency spectrum of the carrier signal.

The present invention presents systems and methods for altering a carrier signal, for example, an SC signal used for cellular uplink in the phase domain by phase shifting a plurality of modulation symbols (also referred to as signal constellations) of the carrier signal to reduce phase discontinuities between consecutive modulation symbols in order to reduce out-of-band emissions of the carrier signal. The modulation symbols are then applied to a phase domain low pass filter (LPF) which consists of unwrapping the phase of the original transmit signal, filtering and then converting back to the time domain prior to transmission. The size, length and/or complexity of the LPF may be significantly reduced since the modulation spectrum of the carrier signal is reduced due to the application of the phase shifts. The phase of the modulation symbols is shifted asymmetrically so that the phase is shifted in-band, i.e. towards a center frequency of a frequency spectrum of the band to reduce and/or avoid undesired emissions at the frequency spectrum edge(s). The phase shift is determined dynamically (i.e. specifically) for each of the modulation symbols based on a modulation type of the carrier signal and/or a spectral location of a subcarrier of the carrier signal to which a respective modulated symbol is mapped.

Altering the carrier signal in the phase domain may allow reduction of the out-of-band emissions while maintaining a constant amplitude of the carrier signal so that efficient low-end power amplifiers, for example, low power and/or low cost amplifiers may be used to transmit the carrier signal. The asymmetrically warped carrier signal having the reduced out-of-band emission values may well meet one or more regulation standards defining the carrier signal transmission characteristics, for example, a spectral mask even when the transmitter implements the low-end amplifiers. Maintaining the constant amplitude of the carrier signal may allow the amplifier to operate in its saturation region thus avoiding the need to operate in a linear region which may require the use of a higher end amplifier. The low-end amplifiers may be used by one or more UEs, for example, a cellular IoT UE and/or a narrow band IoT (NB-IoT) and may thus lead to cost reduction of the UE, power consumption reduction of the UE and/or battery life increase for the UE while avoiding signal distortions resulting in undesired out-of-band emissions.

The reduced phase modulation bandwidth resulting from the phase shift and/or the filtering may further facilitate the possibility of using polar transmitter architecture in the UE to further reduce cost and/or power consumption.

The carrier signal, in particular the SC signal may be one of a plurality of SC signals, for example, a single carrier frequency division multiple access (SC-FDMA), a single carrier time division multiple access (SC-TDMA), a single channel code division multiple access (SC-CDMA) and/or a single channel space division multiple access (SC-SDMA).

Binary data to be transmitted over the carrier signal, in particular the SC signal is received by a carrier signal transmitter which modulates the received binary data using phase shift keying and maps the binary data to modulation symbols in the frequency domain. The modulation may employ one or more of a plurality of phase modulation types (schemes), for example, binary phase-shift keying (BPSK), $\pi/2$-BPSK, quadrature phase-shift keying (QPSK), $\pi/4$-QPSK, differential phase-shift keying (DPSK) and the likes. Shifting the phase of the modulation symbols is done by first dynamically determining, for example, calculating using one or more formulas and/or retrieving from a look up table (LUT) a (deterministic) phase shift for each of the modulation symbols, i.e. the phase shift may be different for each of the modulation symbols. The phase shift is determined according to the modulation scheme and/or the spectral location of one or more subcarriers to which the respective modulated symbol is mapped to by the carrier signal transmitter. The phase shift is applied so that the phase difference between consecutive modulation symbols is biased. The phase shift therefore depends on the modulation type as a different phase differences are used for each of the different modulation types, for example, BPSK has two possible phases per modulation symbol while QPSK has 4 possible phases per modulation symbol. The phase shift may be determined so that the phase shift increases as the subcarrier's frequency spectral location is further away from the center frequency of the band. For example, for un-rotated phase modulation types (BPSK or QPSK) the phase shift may be relatively small for the modulation symbols which are mapped to edge subcarrier(s), i.e. subcarrier(s) located near the edge frequency of the band frequency spectrum within the carrier signal. On the other hand, the phase shift may be significantly large for modulation symbols mapped to central subcarrier(s), i.e. subcarriers located close to a central frequency(s) of the band frequency spectrum within the carrier signal to warp the carrier signal spectrum in-band, i.e. away from the edge(s). The phase shifted modulation symbols are then applied to the phase domain LPF which may be reduced in size, length and/or complexity due to the limited modulation spectrum of the modulation symbols achieved by the reduced phase discontinuity.

Optionally, the deterministic phase shift is determined according to an incremental index of each of the subcarriers which indicates the spectral location of the subcarrier within the carrier signal frequency spectrum.

After the phase shift is determined for each of the modulation symbols, the phase shift is applied accordingly to each of the modulation symbols.

Optionally, the mechanism and/or formula for determining the phase shift is embedded within one or more pilot signals and/or control messages to inform one or more receivers of the carrier signal of the characteristics of the phase shift to allow one or more receivers of the carrier signal to properly demodulate and/or decode the modulated data.

The phase shifting results in an asymmetrically warped carrier signal towards the center frequency (in-band) of the carrier signal frequency spectrum thus reducing and or eliminating out-of-band emissions which may appear at the edges of the carrier signal frequency spectrum. The asymmetrically warped carrier signal maintains similar orthogonality among its subcarriers as a standard respective un-warped carrier signal.

Before explaining at least one embodiment of the invention in detail, it is to be understood that the invention is not necessarily limited in its application to the details of construction and the arrangement of the components and/or methods set forth in the following description and/or illustrated in the drawings and/or the Examples. The invention is capable of other embodiments or of being practiced or carried out in various ways.

The present invention may be a system, a method, and/or a computer program product. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing.

Computer readable program instructions described herein can be downloaded to respective computing/processing devices from a computer readable storage medium or to an external computer or external storage device via a network, for example, the Internet, a local area network, a wide area network and/or a wireless network.

The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

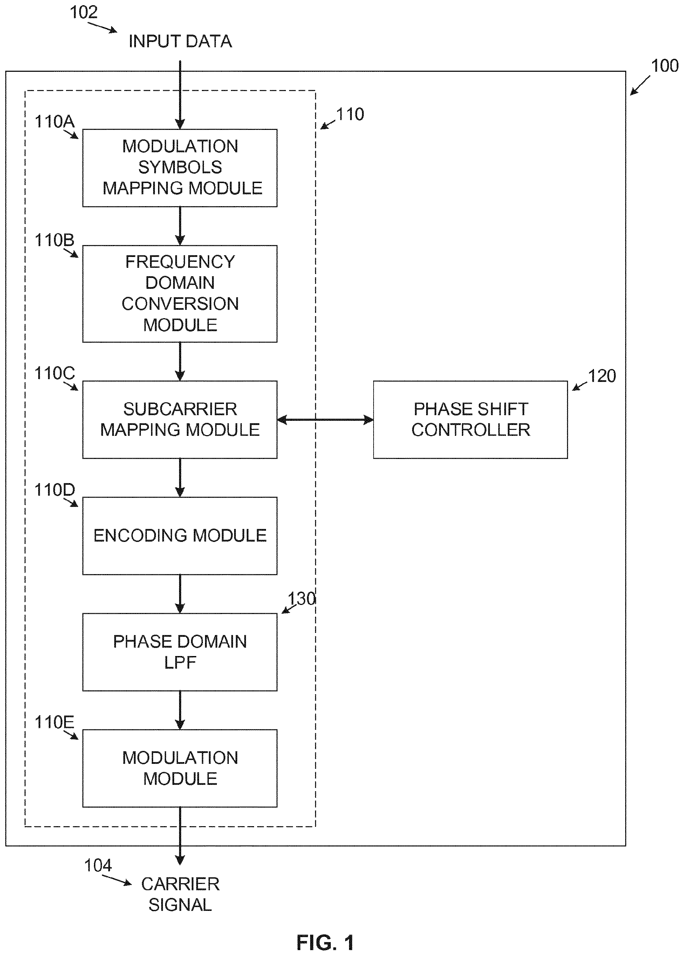

Reference is now made to FIG. 1 which is a schematic illustration of an exemplary apparatus for reducing out-of-band emissions for a carrier signal, in particular an SC signal, according to some embodiments of the present invention. An apparatus 100 may include one or more modules of a carrier signal transmitter 110 and a phase shift controller 120. The carrier signal transmitter 110 building blocks may include, for example, a modulation symbols mapping module 110A, a frequency domain conversion module 110B, a subcarrier mapping module 110C, an encoding module 110D and a modulation module 110E. The carrier signal transmitter 110 may include one or more additional modules such as, for example, an amplifier, one or more filters and/or one or more signal manipulation and/or adjustment modules, however the apparatus 100 only describes modules of the carrier signal transmitter 110 which are relevant for transmitting a carrier signal 104 as described in the present invention. Wherein a module in the context of the present invention may include, for example, an electric circuit, a software module and/or a combination of an electric circuit with a software module, for example, a plurality of program instructions stored in a non-transitory medium and executed by one or more processors and/or one or more cores of one or more processors. The carrier signal 104 may in particular be an SC signal, for example, an SC-FDMA, an SC-TDMA, an SC-CDMA and/or an SC-SDMA.

Binary data 102 which may be in the form of, for example, data bins is received by the modulation symbols mapping module 110A and as part of a phase key modulation sequence the data is mapped to modulation symbols. The modulation may employ one or more of a plurality of phase modulation types (schemes), for example, BPSK, $\pi/2$-BPSK, QPSK, $\pi/4$-QPSK, DPSK and the likes. The frequency domain conversion module 110B, for example, a discrete Fourier transform (DFT) converts the modulation symbols to the frequency domain. For an SC signal, for example, the frequency domain conversion module 110B may employ a DFT which is simply a multiplication by 1. The subcarrier mapping module 110C then maps each of the modulation symbols to one or more of the carrier signal 104. Based on the modulation type (scheme) and/or the subcarrier mapping of the modulation symbols, the phase shift controller 120 may determine a phase shift for each of the modulation symbols. The phase shift controller 120 may determine the phase shift according to the modulation type so that the phase difference between consecutive modulation symbols is biased. For example, BPSK has two possible phases per modulation symbol while QPSK has 4 possible phases per modulation symbol, i.e. each of the modulation types may require a different phase shift to maintain the phase differences to be biased. The phase shift controller 120 may determine the phase shift by, for example, calculate the phase shift using one or more formulas and/or by assigning a value fetched from an LUT for example. The phase shift controller 120 may then instruct the subcarrier mapping module 110C to apply the determined phase shift to each of the modulation symbols. After mapped to respective subcarriers, the shifted modulation symbols are encoded by the encoding module 110D. The encoding module 110D may include one or more modules which may perform one or more operations over the shifted modulation symbols, for example, an inverse fast Fourier transform (IFFT) module to convert the modulation symbols to the time domain, a serializing module to convert the parallel data to a serial sequence of digital data and/or a cyclic prefix insertion module which assigns a cyclic prefix to the transmitted data. The serialized data is then converted to the phase domain and unwrapped to be applied to a phase domain LPF module 130 to limit the frequency spectrum of the carrier signal 104 and remove one or more high frequency components from the carrier signal 104 in order to reduce the undesired out-of-band emissions. Un-wrapping the signal which may be performed for example, by the encoding module 110D is essential to bring the absolute phase differences of all consecutive modulation symbols to include no phase wrapping, i.e. the absolute phase values are brought into a primary phase region. The LPF 130 may be significantly reduced in size, length and/or complexity due to the limited modulation bandwidth of the modulation symbols achieved by reducing the phase discontinuities between the consecutive modulation symbols as applied by the phase shift controller 120. The filtered serial data stream is then converted back to the time domain and may be driven to the modulation module 110E which transmits the data over the radio frequency (RF) medium. The modulation module 110E may include one or more modules, for example, an amplifier and/or a filter for modulating and/or transmitting the serial data stream.

Optionally, the method, mechanism and/or formula used for determining the phase shift is embedded within one or more pilot signals and/or or control messages which are transmitted prior and/or as part of the carrier signal 104 to inform one or more receivers of the characteristics of the phase shift to allow the receiver(s) to properly demodulate and/or decode the modulated data from the carrier signal 104.

Optionally, the apparatus 100 does not include one or more of the modules 110A-110E of the carrier signal transmitter 110. The one or more modules 110A-110E as well as additional modules may be externally attached to the apparatus 100 through one or more interconnecting interfaces.

Optionally, the apparatus 100 and/or parts thereof may be integrated in a device, apparatus, product, unit, system and/or platform comprising the modules 110A-110E, the module 120 and/or the module 130 as well as additional one or more functional elements. The one or more functional elements may include, for example, a carrier signal receiver, a transmission power amplifier and/or one or more function specific module, for example, an IoT function module and the likes.

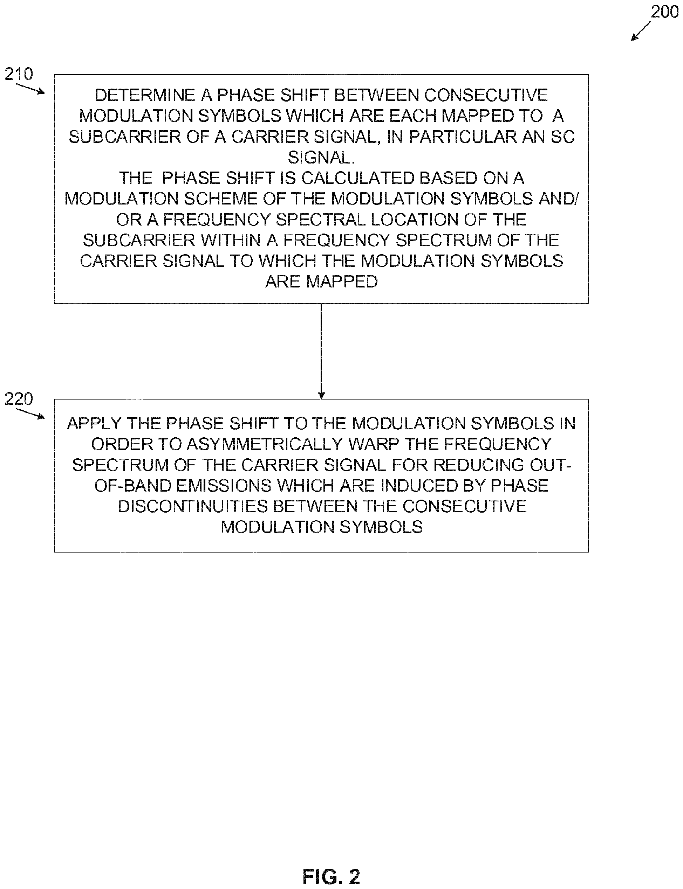

Reference is now made to FIG. 2 which is a flowchart of an exemplary process of reducing out-of-band emissions for a carrier signal, in particular an SC signal, according to some embodiments of the present invention. An exemplary process 200 which may be performed by an apparatus such as the apparatus 100, describes the process of reducing out-of-band emissions for a carrier signal such as the carrier signal 104, in particular an SC signal by asymmetrically warping a frequency spectrum of the carrier signal 104.

As shown at 210, the process 200 starts with dynamically determining a phase shift for each of a plurality of modulation symbols mapping data bins of input data such as the input data 102. The phase shift may be determined by a phase shift controller such as the phase shift controller 120. The phase shift may be determined individually for each of the modulation symbols, i.e. each modulated symbol may be shifted differently in the phase domain. The phase shift may be determined for each specific modulated symbol according to the modulation scheme used to modulate the input data 102, for example, BPSK, $\pi/2$-BPSK, QPSK, $\pi/4$-QPSK and/or DPSK and/or according to the spectral location (position) of a respective subcarrier(s) of the carrier signal 104 to which the specific modulated symbol is mapped. The phase shift controller 120 may determine the phase shift according to the modulation type so that the phase difference between consecutive modulation symbols is biased. For example, BPSK has two possible phases per modulation symbol while QPSK has 4 possible phases per modulation symbol, i.e. each of the modulation types may require a different phase shift to maintain the phase differences to be biased. The phase shift may be determined by employing one or more methods, for example, calculation, LUT and/or pre-defined values. The phase shift may be determined independently for each of the modulation symbols in order to warp the frequency spectrum of the subcarriers of the carrier signal 104 such that the subcarriers are biased to have at least a majority of their power shifted towards a center frequency of the carrier signal 104 and away from an edge of the carrier signal 104. To achieve this, the spectral location of each subcarrier is used to warp the frequency spectrum of the subcarrier to the appropriate direction and in the appropriate level (amount). Modulation symbols which are mapped to center subcarriers, for example, may be slightly biased and/or not biased at all. Modulation symbols which are mapped to left subcarriers may be shifted such that the left subcarriers are biased to have at least the majority of their power shifted right towards the center frequency of the band frequency spectrum of the SC signal 104 and away from the left edge of the band frequency spectrum of the SC signal 104 spectrum. In the same manner modulation symbols which are mapped to right subcarriers may be shifted such that the right subcarriers are biased to have at least the majority of their power shifted left towards the center frequency of the band frequency spectrum of the SC signal 104 and away from the right edge of the band frequency spectrum of the carrier signal 104 spectrum. This is because a small phase shift forces a bias in the phase jump direction when the phase is unwrapped. As an example, for BPSK the phase jump is non-zero when the symbols are different and the phase changes from 0 to $\pi$ (a jump of $\pi$) or from $\pi$ to 0 (a jump of $-\pi$). If a small positive phase shift of value $\varphi$ is applied, the jump is either $\pi + \varphi$ or $-\pi + \varphi$. However, when the phase is unwrapped the phase jump of $\pi + \varphi$ can be replaced with a jump of $-\pi + \varphi$, with the same resulting symbol phase. There is also a phase jump of $\varphi$ when there is no symbol change. Hence, the average phase jump is negatively biased, towards zero. The phase shift is determined so that when applied to the modulation symbols along with the phase domain filter 130 a plurality of phase discontinuities between consecutive modulation symbols may be significantly reduced thus limiting the phase transitions and eventually the phase modulation bandwidth. Limiting the phase transitions may serve to reduce the size, length and/or complexity of the phase domain LPF 130 applied to the carrier signal 104 prior to transmission for limiting the modulation spectrum and/or removing one or more high frequency components from the carrier signal 104 thus reducing the undesired out-of-band emissions.

Optionally, the phase shift is determined according to an incremental index assigned to each of the subcarriers which translates to the frequency spectral location of the subcarrier within the carrier signal 104.

More optionally, the phase shift is determined using a formula presented in equation 1 below.

Equation 1:

$$\Delta\varphi = \begin{cases} -\dfrac{\pi}{2}\left(1 + K\dfrac{n + \frac{1}{2} - \frac{N_{SC}}{2}}{\frac{N_{SC}}{2}}\right), for\ n\ <\ \frac{N_{SC}}{2} \\[4mm] \dfrac{\pi}{2}\left(1 - K\dfrac{n + \frac{1}{2} - \frac{N_{SC}}{2}}{\frac{N_{SC}}{2}}\right), for\ n\ \geq\ \frac{N_{SC}}{2} \end{cases}$$

wherein $\Delta\varphi$ is the phase shift, **n** is an incremental number of each of the subcarriers of the carrier signal 104, the incremental index number is assigned according to the spectral location of each subcarrier, $N_{sc}$ is a total number of the subcarriers within the carrier signal and **K** is a coefficient (constant) chosen to set a weight to the phase shift in order to select a trade-off between the maximum allowable phase shift and the required spectral mask. For example, if **K**=1, the maximum phase shift magnitude applied to BPSK occurs on the central subcarriers and is close to $\pi/2$ and if **K**=0, the maximum allowable phase shift magnitude is almost $\pi/2$ and is applied over all subcarriers.

As seen in equation 1 the value of the phase shift $\Delta\varphi$ changes as a function to the index **n** of the subcarrier. The direction of phase shift $\Delta\varphi$ is also evident from equation 1 as it depends on the direction of the index **n** of the subcarrier. For subcarriers which are spectrally located to the left of the center frequency of the carrier signal 104, i.e. $n < N_{SC}/2$ the phase shift is selected to be positive. values. For subcarriers which are spectrally located to the right of the center frequency of the carrier signal 104, i.e. $n \geq N_{SC}/2$ the phase shift is selected to be negative. The phase shift $\Delta\varphi$ is therefore shifted in the opposite direction of the index **n** so that the phase shift $\Delta\varphi$ is shifted right for left subcarriers and shifted left for right subcarriers.

As shown at 220, once determined, the phase shift may be applied to each of the modulated signals as part of the generation sequence of the carrier signal 104.

By applying the phase shift in an asymmetric manner the frequency spectrum of the carrier signal 104 is warped so that signal energy of each of the subcarriers is biased, i.e. shifted towards the center frequency of the band of the carrier signal 104. As a result energy is reduced in one or more frequency regions which are near the edge(s) of the frequency spectrum of the band of the carrier signal 104 thus reducing the out-of-band emissions.

Constant amplitude as well as subcarriers orthogonality is maintained for the carrier signal 104 during the process 200. The constant amplitude and orthogonality between each of the subcarriers of the carrier signal 104 and any other subcarrier is maintained to be similar to a standard respective carrier signal which is not asymmetrically warped through an apparatus such as the apparatus 100 executing a process such as the process 200.

Manipulating the carrier signal 104 in the phase domain for reducing out-of-band emissions as described herein above while maintaining a constant amplitude of the carrier signal 104 may allow using efficient low-end power amplifiers, for example, low power and/or low cost amplifiers to transmit the carrier signal 104. The asymmetrically warped carrier signal 104 transmitted through the low-end amplifiers operating at their saturated region may still be fully complaint with regulation carrier signal masks making the present invention highly usable for low cost and/or low power UEs, for example, a cellular IoT UE and/or an NB-IoT.

Some embodiments of the present disclosure are provided through examples with reference to the accompanying drawings. However, as will be appreciated by one skilled in the art this invention may be embodied in many different forms and should not be construed as limited to any specific structure or function presented herein.

In one embodiment of the present invention a carrier signal such as the carrier signal 104 is an SC-FDMA signal.

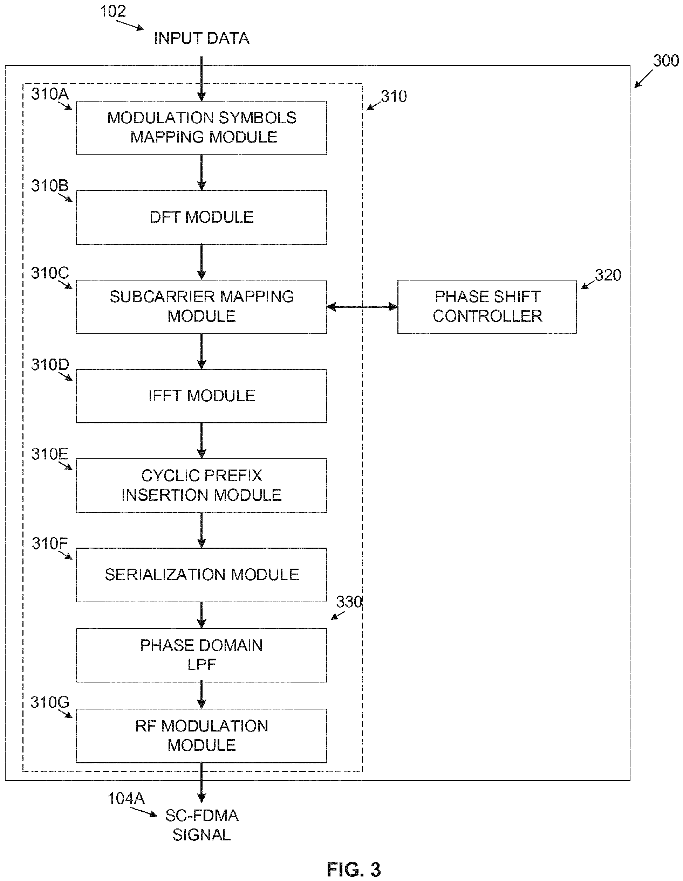

Reference is now made to FIG. 3 schematic illustration of an exemplary apparatus implementation for reducing out-of-band emissions for an SC-FDMA signal, according to some embodiments of the present invention. An apparatus 300 for reducing out-of-band emissions for an SC-FDMA signal 104A may include one or more modules of an SC-FDMA transmitter 310 and a phase shift controller 320. The SC-FDMA transmitter 310 building blocks may include, for example, a modulation symbols mapping module 310A, a DFT module 310B, a subcarrier mapping module 310C, an IFFT module 310D, a cyclic prefix insertion module 310E, a serialization module 310F and an RF modulation module 310G. The SC-FDMA transmitter 310 may include one or more additional modules such as, for example, an amplifier, one or more filters and/or one or more signal manipulation and/or adjustment modules, however the apparatus 300 describes modules of the SC-FDMA transmitter 110 which are relevant for creating and/or transmitting the SC-FDMA signal 104A as described in the present invention. Input data such as the input data 102 is driven into the modulation symbols mapping module 310A which transforms the input data 102 to respective modulation symbols. The modulation symbols mapping module 310A may employ one or more phase modulation schemes, for example, BPSK, $\pi/2$-BPSK, QPSK, $\pi/4$-QPSK, DPSK and the likes. The DFT module 310B converts the modulation symbols to the frequency domain. The subcarrier mapping module 310C then maps each of the modulation symbols to one or more subcarriers of the SC-FDMA signal 104A. Based on the subcarrier mapping of the modulation symbols, the phase shift controller 320 may dynamically (i.e. for each of the modulation symbols individually) determine a phase shift for each of the modulation symbols. The phase shift controller 320 may execute a process such as the process 200 to determine the phase shift for each of the modulation symbols. The phase shift controller 320 may then instruct the subcarrier mapping module 310C to apply the determined phase shift to each of the modulation symbols. After mapped to the respective subcarriers, the IFFT module 310D may convert the shifted modulation symbols (and more specifically, each point of the shifted modulation symbols) to the time domain and the cyclic prefix insertion module 310E may insert an appropriate cyclic prefix to the converted data. The signal is converted to the phase domain again and processed through a phase domain filter 330. The phase domain LPF 330 may be applied to the data stream generated by the serialization module 310F in order to remove one or more high frequency components from the SC-FDMA signal 104A for reducing out-of-band emissions. The length, size and/or complexity (and ultimately cost) of the LPF 30 may be significantly reduced due to the limited modulation spectrum of the SC-FDMA signal 104A achieved by the phase shifting of the modulation symbols as performed by the phase shift controller 320. Prior to processing the signal with the phase domain filter 330, the signal is unwrapped by, for example, the serialization module 310F in order to bring the absolute phase differences of all consecutive modulation symbols to include no phase wrapping and are brought into a primary phase region. After applied to the phase domain filter 330 the signal is converted back to the time domain. The converted data may then be serialized by the serialization module 310F which generates a digital serial stream and converts it to an analog stream using for example a digital to analog (DAC) converter. The serial data stream may be applied to a frequency wideband filter however with employing the process 200, the need for further narrow band filtering is avoided for the data stream before driving it to the RF modulation module 310G.

To further illustrate the phase shift process as performed by the process 200 an exemplary SC-FDMA signal such as the SC-FDMA signal 104A is presented. The input data 102 may be phased modulated using BPSK and/or QPSK modulation. For an SC-FDMA signal 104A with 15 KHz subcarrier spacing, for example, the IFFT module 310D may be selected to be a 128 point IFFT. For an SC-FDMA signal 104A with 3.75 KHz subcarrier spacing, a 512 point IFFT module 310D may be implemented.

Optionally, only the central points of the modulation symbols are used, for example, 12 and 48 points for the 15KHz and 3.75KHz spacing respectively with the remaining bins (points) zero padded. The resulting time domain signal following the conversion by the IFFT module 310D is therefore sampled at 1.92MHz. For the exemplary SC-FDMA signals 104A with 15KHz and 3.75KHz subcarrier spacing, the cyclic prefix insertion module 310E may insert a cyclic prefix of, for example, 9 and 36 samples at 1.92MHz respectively. Increasing the cyclic prefix however has no impact over the results as presented herein.

For the exemplary SC-FDMA signal 104A the value of a coefficient such as the coefficient K is selected to be 1. However for a less stringent spectral mask the value of $K$ can be lowered to reduce the required transmitter phase modulation bandwidth.

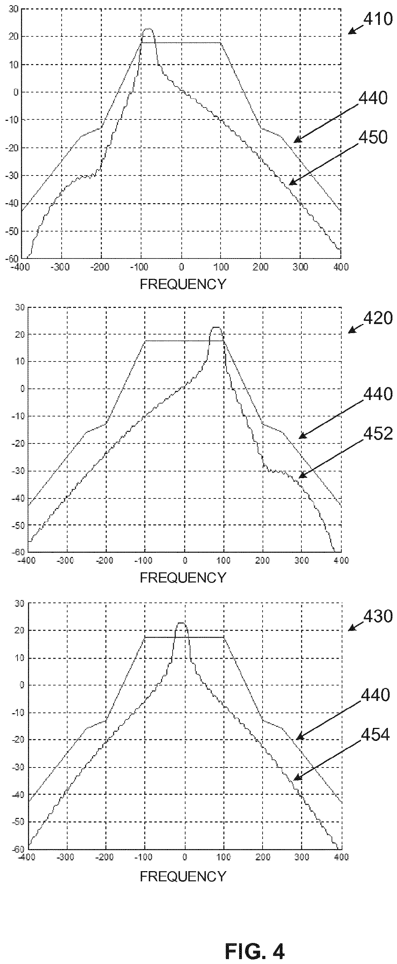

The following figures, FIG. 4, FIG. 5 and FIG 6 are related to the exemplary SC-FDMA signal 104A.

Reference is now made to FIG. 4 which is a schematic illustration of a spectral view presenting exemplary warpage of a spectrum of subcarriers of an SC-FDMA signal with respect to a spectral mask of an SC-FDMA, according to some embodiment of the present invention. Illustration 410 presents a spectrum 450 of a left most subcarrier within an SC-FDMA signal such as the SC-FDMA signal 104A. As can be seen the spectrum 450 is asymmetrically warped in order to shift most of the signal energy to the right (in-band) while maintaining full compliance with an SC-FDMA signal spectral mask 440. Illustration 420 presents a spectrum 452 of a right most subcarrier within an SC-FDMA signal such as the SC-FDMA signal 104A. As can be seen the spectrum 452 is asymmetrically warped in order to shift most of the signal energy to the left (in-band) while maintaining full compliance with the SC-FDMA spectral mask 440. Illustration 430 presents a spectrum 452 of a central subcarrier within an SC-FDMA signal such as the SC-FDMA signal 104A. As can be seen the spectrum 454 is not and/or slightly warped as the signal energy does not need to shift since the subcarrier is at and/or near the center of the spectrum of the band within the SC-FDMA signal 104A and maintains full compliance with the SC-FDMA spectral mask 440.

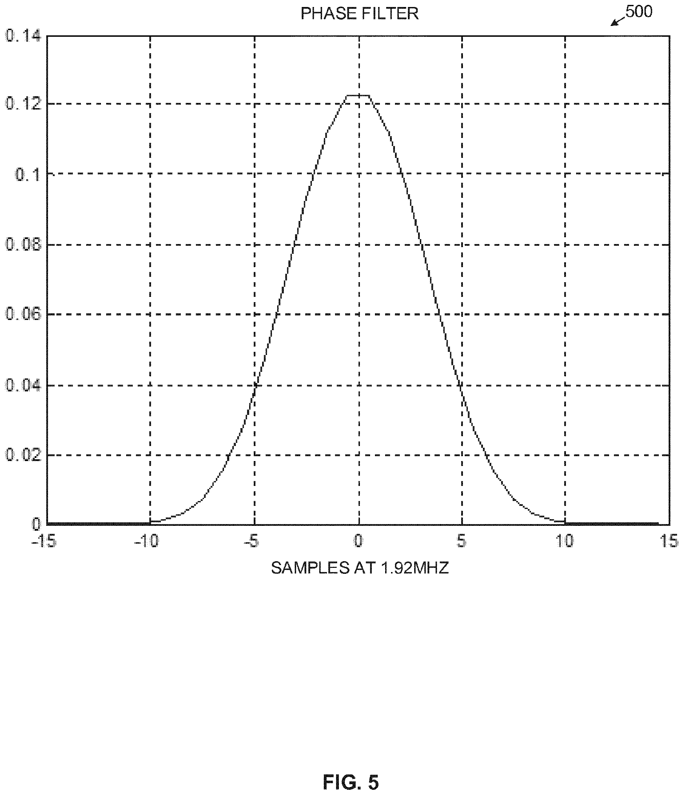

Reference is now made to FIG. 5 which is a schematic illustration of an exemplary phase LPF, according to some embodiment of the present invention. Illustration 500 presents an exemplary phase domain LPF employing a Gaussian pulse centered at 1.92MHz to fit the exemplary SC-FDMA signal 104A sampled at 1.92MHz as described herein above.

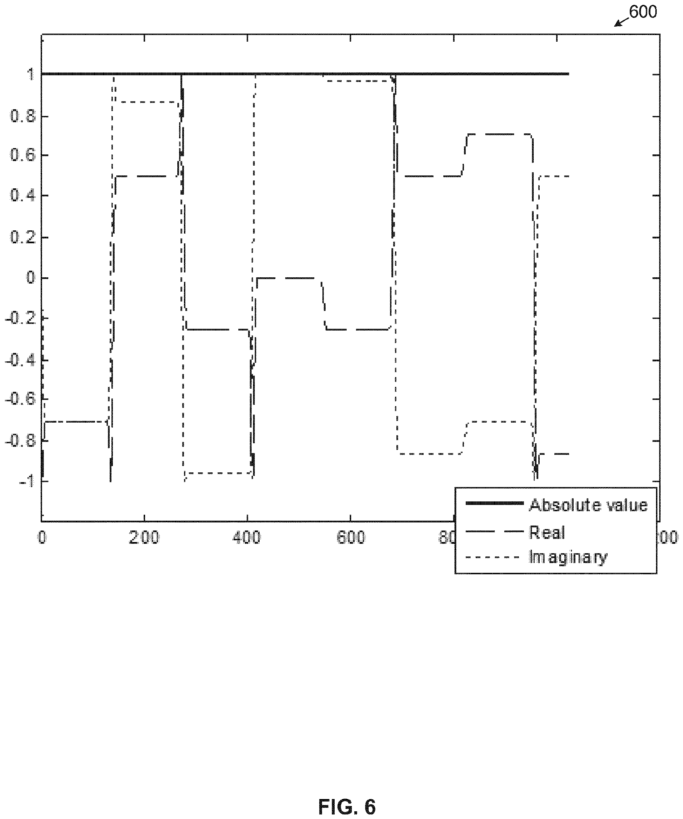

Reference is now made to FIG. 6 which is a schematic illustration of a time domain warped SC-FDMA signal maintaining a constant amplitude, according to some embodiment of the present invention. Illustration 600 presents an exemplary SC-FDMA signal such as the SC-FDMA signal 104A sampled at 1.92MHz. As seen, the amplitude of the SC-FDMA signal 104A remains constant as result of the phase domain shifting and phase domain filtering performed by a process such as the process 200. Due to the phase domain conversion performed the SC-FDMA signal 104A during the process 200, the SC-FDMA signal 104A maintains a constant amplitude while significantly smoothing the signal transitions thus greatly limiting the phase modulation bandwidth and/or phase discontinuities between consecutive data bins which in turn lead to a reduction in out-of-band emissions.

The descriptions of the various embodiments of the present invention have been presented for purposes of illustration, but are not intended to be exhaustive or limited to the embodiments disclosed. Many modifications and variations will be apparent to those of ordinary skill in the art without departing from the scope of the described embodiments. The terminology used herein was chosen to best explain the principles of the embodiments, the practical application or technical improvement over technologies found in the marketplace, or to enable others of ordinary skill in the art to understand the embodiments disclosed herein.

As used herein the term "about" refers to $\pm$ 10 %.

The terms "comprises", "comprising", "includes", "including", "having" and their conjugates mean "including but not limited to". This term encompasses the terms "consisting of' and "consisting essentially of'.

The phrase "consisting essentially of' means that the composition or method may include additional ingredients and/or steps, but only if the additional ingredients and/or steps do not materially alter the basic and novel characteristics of the claimed composition or method.

As used herein, the singular form "a", "an" and "the" include plural references unless the context clearly dictates otherwise. For example, the term "a compound" or "at least one compound" may include a plurality of compounds, including mixtures thereof.

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment of the invention may include a plurality of "optional" features unless such features conflict.

Throughout this application, various embodiments of this invention may be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination or as suitable in any other described embodiment of the invention. Certain features described in the context of various embodiments are not to be considered essential features of those embodiments, unless the embodiment is inoperative without those elements.

In addition, citation or identification of any reference in this application shall not be construed as an admission that such reference is available as prior art to the present invention. To the extent that section headings are used, they should not be construed as necessarily limiting.

## Claims

1. An apparatus for reducing out-of-band emissions of a carrier signal, in particular of a single carrier, SC, signal, adapted to:

   determine (120, 320) a phase shift between consecutive modulation symbols of a carrier signal according to a frequency spectral location of a subcarrier mapping the modulation symbol within a frequency spectrum of the band of the carrier signal;
   apply (110C, 320C) the phase shift to the carrier signal;
   submit the carrier signal through a phase domain low pass filter, LPF (130, 330), in order to asymmetrically warp the frequency spectrum of the carrier signal; and
   wherein the phase shift is determined dynamically for at least one of the modulation symbols, so that a phase of each modulation symbol is shifted towards a center frequency of the frequency spectrum and away from at least one edge frequency of the frequency spectrum.

2. The apparatus of claim 1, further comprising the carrier signal is a member selected from a group consisting of: a single carrier frequency division multiple access, SC-FDMA, a single carrier time division multiple access, SC-TDMA, a single channel code division multiple access, SC-CDMA, and a single channel space division multiple access, SC-SDMA.

3. The apparatus of claim 1, wherein the phase domain LPF is applied to the carrier signal in order to reduce a phase discontinuity between the consecutive modulation symbols, in particular after insertion of a cyclic prefix to the carrier signal.

4. The apparatus of claim 1, wherein the modulation symbols map a plurality of data bits which are phase modulated.

5. The apparatus of claim 1, further comprising the phase shift is applied according to an incremental index of a plurality, in particular each, of the subcarriers of the carrier signal, wherein the phase is shifted right for modulation symbols which are mapped to left subcarriers which are spectrally located left of the center; and/or the phase is shifted left for modulation symbols which are mapped to right subcarriers which are spectrally located right of the center.

6. The apparatus of claim 5, further comprising the phase shift is applied according to a formula:

$$\Delta\varphi = \begin{cases} -\dfrac{\pi}{2}\left(1 + K\dfrac{n + 1/2 - N_{SC}/2}{N_{SC}/2}\right), for\ n < N_{SC}/2 \\[3mm] \dfrac{\pi}{2}\left(1 - K\dfrac{n + 1/2 - N_{SC}/2}{N_{SC}/2}\right), for\ n \geq N_{SC}/2 \end{cases}$$

wherein $\Delta\varphi$ is the phase shift, $n$ is an incremental index number of each of the subcarriers of the carrier signal, the incremental index number is assigned according to the spectral location of each subcarrier, $N_{sc}$ is a total number of the subcarriers within the carrier signal and $K$ is a coefficient for applying a weight to the phase shift.

7. A method for reducing out-of-band emissions of a carrier signal, in particular of a single carrier, SC, signal, comprising:

determining (210) a phase shift between consecutive modulation symbols of a carrier signal according to a frequency spectral location of a subcarrier mapping the modulation symbol within a frequency spectrum of the band of the carrier signal;
applying (220) the phase shift to the carrier signal;
submit the carrier signal through a phase domain LPF in order to asymmetrically warp the frequency spectrum of the carrier signal; and
wherein the phase shift is determined dynamically for at least one of the modulation symbols, so that a phase of each modulation symbol is shifted towards a center frequency of the frequency spectrum and away from at least one edge frequency of the frequency spectrum.

8. The method of claim 7, wherein the phase domain LPF is applied to the carrier signal in order to reduce a phase discontinuity between the consecutive modulation symbols, in particular after insertion of a cyclic prefix to the carrier signal.

**Patentansprüche**

1. Apparat zum Reduzieren von Nebenbandemissionen eines Trägersignals, insbesondere eines Einzelträger, SC, Signals, der eingerichtet ist zum:

Ermitteln (120, 320) einer Phasenverschiebung zwischen aufeinander folgenden Modulationssymbolen eines Trägersignals gemäß einer Frequenzspektralposition eines Unterträgers, der das Modulationssymbol abbildet, innerhalb eines Frequenzspektrums des Bandes des Trägersignals;
Anwenden (110C, 320C) der Phasenverschiebung auf das Trägersignal;
Schicken des Trägersignals durch ein Phasendomänen-Tiefpassfilter, LPF (130, 330), um das Frequenzspektrum des Trägersignals asymmetrisch zu verformen; und
wobei die Phasenverschiebung dynamisch für mindestens eines der Modulationssymbole ermittelt wird, so dass eine Phase jedes Modulationssymbols in Richtung einer Mittenfrequenz des Frequenzspektrums und von mindestens einer Randfrequenz des Frequenzspektrums weg verschoben wird.

2. Apparat nach Anspruch 1, ferner umfassend, dass das Trägersignal ein Element ausgewählt aus einer Gruppe bestehend aus: Einzelträger-Frequenzmultiplex "Single Carrier Frequency Division Multiple Access", SC-FDMA, Einzelträger-Zeitmultiplex "Single Carrier Time Division Multiple Access", SC-TDMA, Einzelkanal-Codemultiplex "Single Channel Code Division Multiple Access", SC-CDMA, und Einzelkanal-Raummultiplex "Single Channel Space Division Multiple Access", SC-SDMA ist.

3. Apparat nach Anspruch 1, wobei das Phasendomänen-LPF auf das Trägersignal angewendet wird, um eine Phasendiskontinuität zwischen den aufeinander folgenden Modulationssymbolen zu reduzieren, insbesondere nach Einsetzen eines zyklischen Präfix in das Trägersignal.

4. Apparat nach Anspruch 1, wobei die Modulationssymbole eine Vielzahl von Datenbits abbilden, die phasenmoduliert sind.

5. Apparat nach Anspruch 1, ferner umfassend, dass die Phasenverschiebung gemäß einem inkrementellen Index auf eine Vielzahl, insbesondere auf jeden der Unterträger des Trägersignals angewendet wird, wobei die Phase für Modulationssymbole, die auf linken Unterträgern abgebildet werden, die spektral links der Mitte positioniert sind, nach rechts verschoben wird; und/oder die Phase für Modulationssymbole, die auf rechten Unterträgern abgebildet werden, die spektral rechts der Mitte positioniert sind, nach links verschoben wird.

6. Apparat nach Anspruch 5, ferner umfassend, dass die Phasenverschiebung gemäß einer Formel:

$$\Delta\varphi = \begin{cases} -\dfrac{\pi}{2}\left(1 + K\dfrac{n + \frac{1}{2} - \frac{N_{sc}}{2}}{\frac{N_{sc}}{2}}\right), \text{ für } n < \frac{N_{sc}}{2} \\ \dfrac{\pi}{2}\left(1 - K\dfrac{n + \frac{1}{2} - \frac{N_{sc}}{2}}{\frac{N_{sc}}{2}}\right), \text{ für } n \geq \frac{N_{sc}}{2} \end{cases}$$

angewendet wird, wobei $\Delta\varphi$ die Phasenverschiebung ist, **n** eine inkrementelle Indexzahl von jedem der Unterträger des Trägersignals ist, die inkrementelle Indexzahl gemäß der Spektralposition jedes Unterträgers zugewiesen wird, $N_{sc}$ die Gesamtanzahl der Unterträger innerhalb des Trägersignals ist, und $K$ ein Koeffizient ist, um eine Gewichtung auf die Phasenverschiebung anzuwenden.

7. Verfahren zum Reduzieren von Nebenbandemissionen eines Trägersignals, insbesondere eines Einzelträger, SC, Signals, umfassend:

Ermitteln (210) einer Phasenverschiebung zwischen aufeinander folgenden Modulationssymbolen eines Trägersignals gemäß einer Frequenzspektralposition eines Unterträgers, der das Modulationssymbol abbildet, innerhalb eines Frequenzspektrums des Bandes des Trägersignals;
Anwenden (220) der Phasenverschiebung auf das Trägersignal;
Schicken des Trägersignals durch ein Phasendomänen-LPF, um das Frequenzspektrum des Trägersignals asymmetrisch zu verformen; und
wobei die Phasenverschiebung dynamisch für mindestens eines der Modulationssymbole ermittelt wird, so dass eine Phase jedes Modulationssymbols in Richtung einer Mittenfrequenz des Frequenzspektrums und von mindestens einer Randfrequenz des Frequenzspektrums weg verschoben wird.

8. Verfahren nach Anspruch 7, wobei das Phasendomänen-LPF auf das Trägersignal angewendet wird, um eine Phasendiskontinuität zwischen den aufeinander folgenden Modulationssymbolen zu reduzieren, insbesondere nach Einsetzen eines zyklischen Präfix in das Trägersignal.

**Revendications**

1. Appareil pour réduire les émissions hors bande d'un signal de porteuse, en particulier d'un signal de porteuse unique, SC, conçu pour :

déterminer (120, 320) un déphasage entre des symboles de modulation consécutifs d'un signal de porteuse en fonction d'un emplacement spectral de fréquence d'une sous-porteuse mappant le symbole de modulation dans un spectre de fréquences de la bande du signal de porteuse ;
appliquer (110C, 320C) le déphasage au signal de porteuse ;
soumettre le signal de porteuse à travers un filtre passe-bas, LPF, à domaine de phase (130, 330), afin de déformer de manière asymétrique le spectre de fréquences du signal de porteuse ; et
dans lequel le déphasage est déterminé de façon dynamique pour au moins un des symboles de modulation, de sorte qu'une phase de chaque symbole de modulation soit décalée vers une fréquence centrale du spectre de fréquences et éloignée d'au moins une fréquence de bord du spectre de fréquences.

2. Appareil selon la revendication 1, comprenant en outre le fait que le signal de porteuse est un élément sélectionné dans un groupe constitué par : un accès multiple par répartition en fréquence à porteuse unique, SC-FDMA, un accès multiple par répartition dans le temps à porteuse unique, SC-TDMA, un accès multiple par répartition en code à canal unique, SC-CDMA, et un accès multiple par répartition spatiale à canal unique, SC-SDMA.

3. Appareil selon la revendication 1, dans lequel le LPF à domaine de phase est appliqué au signal de porteuse afin de réduire une discontinuité de phase entre les symboles de modulation consécutifs, en particulier après l'insertion d'un préfixe cyclique dans le signal de porteuse.

4. Appareil selon la revendication 1, dans lequel les symboles de modulation mappent une pluralité de bits de données qui sont modulés en phase.

**5.** Appareil selon la revendication 1, comprenant en outre le fait que le déphasage est appliqué selon un indice incrémentiel d'une pluralité, en particulier de chacune, des sous-porteuses du signal de porteuse,
dans lequel la phase est décalée à droite pour des symboles de modulation qui sont mappés avec des sous-porteuses de gauche qui sont situées spectralement à gauche du centre ; et/ou
la phase est décalée à gauche pour des symboles de modulation qui sont mappés avec des sous-porteuses de droite qui sont situées spectralement à droite du centre.

**6.** Appareil selon la revendication 5, comprenant en outre le fait que le déphasage est appliqué selon une formule :

$$\Delta\varphi = \begin{cases} -\dfrac{\pi}{2}\left(1 + K\dfrac{n + 1/2 - N_{SC}/2}{N_{SC}/2}\right), pour \ n \ < \ N_{SC}/2 \\[4mm] \dfrac{\pi}{2}\left(1 - K\dfrac{n + 1/2 - N_{SC}/2}{N_{SC}/2}\right), pour \ n \ \geq \ N_{SC}/2 \end{cases}$$

où $\Delta\varphi$ est le déphasage, n est un numéro d'indice incrémentiel de chacune des sous-porteuses du signal de porteuse, le numéro d'indice incrémentiel est attribué en fonction de l'emplacement spectral de chaque sous-porteuse, $N_{sc}$ est un nombre total des sous-porteuses dans le signal de porteuse et K est un coefficient pour appliquer un poids au déphasage.

**7.** Procédé pour réduire les émissions hors bande d'un signal de porteuse, en particulier d'un signal de porteuse unique, SC, comprenant de :

déterminer (210) un déphasage entre des symboles de modulation consécutifs d'un signal de porteuse en fonction d'un emplacement spectral de fréquence d'une sous-porteuse mappant le symbole de modulation dans un spectre de fréquences de la bande du signal de porteuse ;
appliquer (220) le déphasage au signal de porteuse ;
soumettre le signal de porteuse à travers un LPF à domaine de phase afin de déformer de manière asymétrique le spectre de fréquences du signal de porteuse ; et
dans lequel le déphasage est déterminé de façon dynamique pour au moins un des symboles de modulation, de sorte qu'une phase de chaque symbole de modulation soit décalée vers une fréquence centrale du spectre de fréquences et éloignée d'au moins une fréquence de bord du spectre de fréquences.

**8.** Procédé selon la revendication 7, dans lequel le LPF à domaine de phase est appliqué au signal de porteuse afin de réduire une discontinuité de phase entre les symboles de modulation consécutifs, en particulier après l'insertion d'un préfixe cyclique dans le signal de porteuse.

102

INPUT DATA

100

110A

110

MODULATION
SYMBOLS
MAPPING MODULE

110B

FREQUENCY
DOMAIN
CONVERSION
MODULE

110C

SUBCARRIER
MAPPING MODULE

120

PHASE SHIFT
CONTROLLER

110D

ENCODING MODULE

130

PHASE DOMAIN
LPF

110E

MODULATION
MODULE

104

CARRIER
SIGNAL

**FIG. 1**

200

210

DETERMINE A PHASE SHIFT BETWEEN CONSECUTIVE MODULATION SYMBOLS WHICH ARE EACH MAPPED TO A SUBCARRIER OF A CARRIER SIGNAL, IN PARTICULAR AN SC SIGNAL.

THE PHASE SHIFT IS CALCULATED BASED ON A MODULATION SCHEME OF THE MODULATION SYMBOLS AND/ OR A FREQUENCY SPECTRAL LOCATION OF THE SUBCARRIER WITHIN A FREQUENCY SPECTRUM OF THE CARRIER SIGNAL TO WHICH THE MODULATION SYMBOLS ARE MAPPED

220

APPLY THE PHASE SHIFT TO THE MODULATION SYMBOLS IN ORDER TO ASYMMETRICALLY WARP THE FREQUENCY SPECTRUM OF THE CARRIER SIGNAL FOR REDUCING OUT-OF-BAND EMISSIONS WHICH ARE INDUCED BY PHASE DISCONTINUITIES BETWEEN THE CONSECUTIVE MODULATION SYMBOLS

**FIG. 2**

102
INPUT DATA

300

310A

**MODULATION SYMBOLS MAPPING MODULE** — 310

310B

**DFT MODULE**

310C

**SUBCARRIER MAPPING MODULE** ←→ **PHASE SHIFT CONTROLLER** — 320

310D

**IFFT MODULE**

310E

**CYCLIC PREFIX INSERTION MODULE**

310F

**SERIALIZATION MODULE**

330

**PHASE DOMAIN LPF**

310G

**RF MODULATION MODULE**

104A
SC-FDMA SIGNAL

**FIG. 3**

**FIG. 4**

FIG. 5

FIG. 6

**EP 3 391 603 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2011194510 A1

### Non-patent literature cited in the description

- Narrow band OFDMA- Tone-Phase- Shift Keying Modulation. **QUALCOMM INCORPORATED.** 33GPP DRAFT; GP-140842- TONE PHASE SHIFT KEYING, 3RD GENERATION PARTNERSHIP PROJECT (3GPP). MOBILE COMPETENCE CENTRE, 17 November 2014

- Peak-to-Average Power Ratio and Power Spectral Density of Tone-Phase-Shift Keying. **QUALCOMM INCORPORATED.** 3GPP DRAFT; GP-150116-NB-OFDMA PAPR AND PSD OF TPSK, 3RD GENERATION PARTNERSHIP PROJECT (3GPP). MOBILE COMPETENCE CENTRE, 08 March 2015